# EUROPEAN PATENT APPLICATION

(11) **EP 2 258 565 A1**
(43) Date of publication of application: **08.12.2010**
(21) Application number: 10008694.1
(22) Date of filing: 15.08.2006
(51) Int. Cl.: B60C 9/09, B60C 15/00, B60C 9/02

(54) **Tire with reinforced bead/sidewall design**

(30) Priority: 01.09.2005 US 217738
(62) Divisional of application: 06801463.8
(71) Applicant: Bridgestone Americas Tire Operations, LLC, Nashville, TN 37214 (US)
(72) Inventor: Jin, Jie, Copley Ohio 44321 (US); Crano, Michael, Wadsworth Ohio 44281 (US)
(74) Representative: Banzer, Hans-Jörg

(57) **Abstract**

A tire (100), which has a maximum section width (Wₘ), an upper section (U) above the maximum section width (Wₘ), and a lower section (L) below the maximum section width (Wₘ), includes a tread (102) extending circumferentially about the tire (100), a pair of sidewalls (104), a pair of bead portions (106), and at least one carcass ply (114, 116) extending circumferentially about the tire (100) from one bead portion (106) to the other. The tire (100) further includes a reinforcement ply (144) extending circumferentially about the tire (100) and being disposed between the at least one carcass ply (144) and tread (102) and at least one of the sidewalls (104) of the tire (100). The reinforcement ply (144) has a lower end (208) that terminates in the lower section (L) of the tire (100). The reinforcement ply (144) comprises two arrays of cords (302, 304) spaced apart from each other, wherein the cord (302, 304) in the respective arrays or rows a orientated parallel to each other. The reinforcement ply (144) is not wound around the bead cores (108) and thus forms a so called floating ply. The bead filler insert (202) is spaced from the bead filler (110) by a gap consisting of rubber material.

## Description

### FJELD OF THE INVENTION

The present application relates to tires and, more particularly, to a tire with a sidewall reinforcement to improve sidewall performance of the tire.

### BACKGROUND

In an inflated and loaded condition, a radial tire is subject to bending moments at the sidewall areas at the center of the tire footprint. The strains and stresses created by the moments are directly related to the sidewall performance of the tire.

Previous research and studies have demonstrated that the maximum sidewall surface strain occurs in the least stiff area of the sidewall of a tire. Because of cord compression created during the loading of the tire the combined cord tension in the upper sidewall area is reduced and that area is most vulnerable to sidewall bending. Therefore, the maximum sidewall surface strain is located in the upper sidewall area.

### SUMMARY

A tire, which has a maximum section width, an upper section above the maximum section width, and a lower section below the maximum section width, includes a tread extending circumferentially about the tire, a pair of sidewalls, a pair of bead portions, and at least one carcass ply extending circumferentially about the tire from one bead portion to the other. The tire further includes a reinforcement ply extending circumferentially about the tire and being disposed between the at least one carcass ply the tread and at least one of the sidewalls of the tire. The reinforcement ply has a lower end that terminates in the lower section of the tire.

### BRIEF DESCRIPTION OF DRA WINGS

The accompanying drawings, together with the detailed description provided below, describe exemplary embodiments of the claimed invention. In the drawings and description that follow, like elements are identified with the same reference numerals. The drawings are not to scale and the proportion of certain elements may be exaggerated for the purpose of illustration.

**Figure 1** is a cross-sectional view of one embodiment of half of a tire 100.

**Figure 2** is an enlarged perspective view of a portion of the tire 100 of **Figure 1**.

**Figure 3** is a perspective view of one embodiment of a portion of a reinforcement ply provided in the tire **100** of **Figure 1**.

**Figure 4** is a sidewall surface strain plot comparing a P255/45R18 tire with and without a sidewall reinforcement.

### DETAILED DESCRIPTION

The following includes definitions of selected terms employed herein. The definitions include various examples and/or forms of components that fall within the scope of a term and that may be used for implementation. The examples are not intended to be limiting. Both singular and plural forms of terms may be within the definitions.

"Axial" or "axially" refer to a direction that is parallel to the axis of rotation of a tire.

"Circumferential" and "circumferentially" refer to lines or directions extending along the perimeter of the surface of the tread parallel to the equatorial plane and perpendicular to the axial direction of the tire.

"Equatorial plane" refers to the plane that is perpendicular to the tire's axis of rotation and passes through the center of the tire's tread.

"Groove" refers to an elongated void area in the tread of the tire that extends circumferentially in a straight, curved or zig-zag manner.

"Lateral" or "laterally" refer to a direction along the tread of the tire going from one sidewall of the tire to the other sidewall.

"Radial" or "radially," as used herein, refer to a direction perpendicular to the axis of rotation of the tire.

"Sidewall'' refers to that portion of the tire between the tread and the bead.

"Tread" refers to that portion of the tire that comes into contact with the road under normal load.

Directions are also stated in this application with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" are used in connection with an element, the "upper" element is spaced closer to the tread than the "lower" element. Additionally, when relative directional terms such as "above" or "below" are used in connection with an element, an element that is "above" another element is closer to the tread than the other element. The terms "inward" and "inwardly" refer to a general direction towards the equatorial plane of the tire, whereas "outward" and "outwardly" refer to a general direction away from the equatorial plane of the tire and towards the sidewall of the tire. Thus, when relative directional terms such as "inner" and "outer" are used in connection with an element, the "inner" element is spaced closer to the equatorial plane of the tire than the "outer" element.

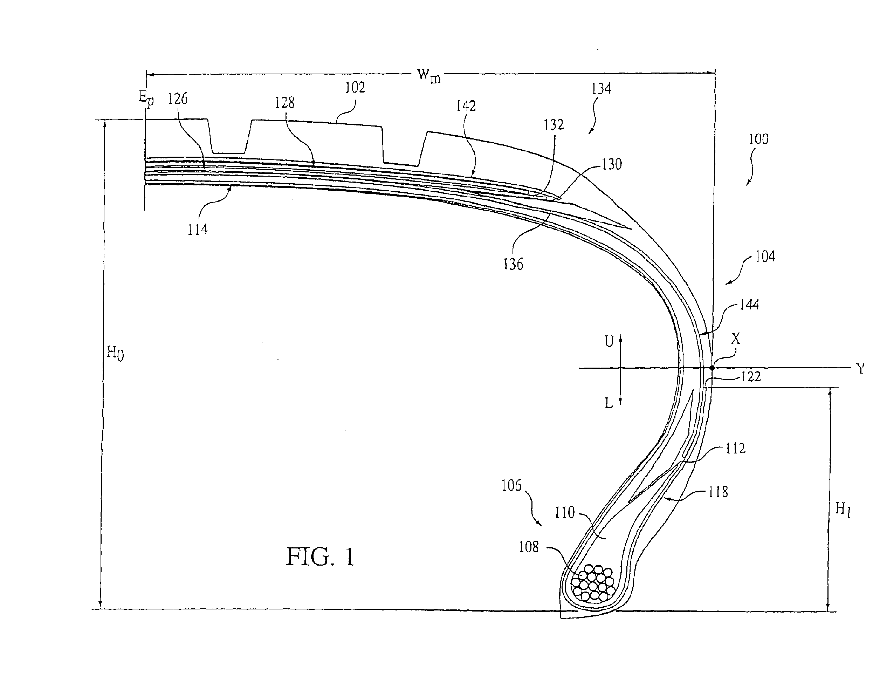

Illustrated in **Figure 1** is a cross-sectional view of half of one embodiment of a tire **100**. Although only half of the tire **100** isdepicted in the drawings, it will be appreciated that the other half of the tire **100** is a substantial mirror image of the half depicted. The tire **100** has an equatorial plane **Eₚ** and a maximum section width **Wₘ** measured from the equatorial plane **Eₚ** to the outer most point of the tire **100** (i.e., point **X).** The tire **100** can be divided into two sections - an upper section **U** and a lower section **L.** Separating the upper section **U** from the lower section **L** is a hypothetical line **Y** drawn through point **X** that is substantially parallel to the axis of rotation of the tire **100.** The upper section **U** is the portion of the tire **100** that is disposed above the maximum section width **Wₘ** of the tire **100** (represented by line **Y),** while the lower section **L** is disposed below the maximum section width Vₘ of the tire **100** (represented by line **Y).**

With continued reference to **Figure 1****,** the tire **100** includes a tread **102** provided in the upper section U of the tire **100,** a sidewall **104** provided in both the upper and lower sections **U, L** of the tire **100,** and a bead portion **106** provided in the lower section **L** of the tire **100.** The bead portion **106** includes a bead core **108** and a bead filler **110** having an upper end **112.**

The tire **100** includes a carcass ply **114** that extends circumferentially about the tire **100** from one bead portion (e.g., bead portion **106**) to the other bead portion (not shown). The carcass ply **114** is wound outwardly about the bead core **108** and extends upwardly towards the tread **102** to form a turn-up portion **118.** The turn-up portion **118** terminates at a turn-up end **122.** Although the tire **100** illustrated in **Figure 1** includes one carcass ply, the tire **100** can include two or more carcass plies in alternative embodiments (not shown).

With continued reference to the embodiment illustrated in **Figure 1****,** the turn-up portion **118** of the carcass ply **114** has a height **H₁** measured radially from the turn-up end **122** to the base of the bead core **108.** Preferably, the height **H₁** of the first turn-up portion **118** is between about 30% and about 70% of the section height **H₀** (which is measured from the outer tread surface at the equatorial plane **Eₚ** to the base of the bead core **108).** In alternative embodiments (not shown), the height **H₁** of the first turn-up portion **118** may be less than 30% or greater than 70% of the section height **H₀** depending on the design.

In one embodiment, the carcass ply **114** includes parallel-aligned cords that are radially disposed. In other words, the parallel-aligned cords are oriented substantially perpendicular to the equatorial plane **Eₚ** of the tire **100.** In alternative embodiments, the carcass ply can include parallel-aligned cords that are biased with respect to the equatorial plane **Eₚ** of the tire **100.** In all cases, the cords can be constructed of, for example, nylon or polyester.

With continued reference to **Figure 1****,** the tire **100** further includes first and second belts **126, 128** that extend circumferentially about the tire **100.** The first and second belts **126, 128** are provided between the tread **102** and the first and second carcass plies **114, 116** as shown in **Figure 1****.** The first and second belts **126, 128** terminate at edges **130, 132,** respectively, at a location near a shoulder region **134** of the tire **100.** Although the tire **100** illustrated in **Figure 1** features two belts, the tire **100** can include a single belt or more than two belts in alternative embodiments (not shown).

In one embodiment, the first and second belts **126, 128** include parallel-aligned cords or wires that are radially disposed. In alternative embodiments, one or more of the belts can include parallel-aligned cords or wires that are biased with respect to the equatorial plane **Eₚ** of the tire **100.** In all cases, the cords or wires can be constructed of, for example, steel or other

With continued reference to **Figure 1****,** the tire **100** also includes a belt edge insert **136** provided in the shoulder region **134** of the tire **100** between the edges **130, 132** of the first and second belts **126, 128,** respectively, and the carcass ply **114.** The belt edge insert **136** has an inner end **138** and an outer end **140.** The belt edge insert **136** is configured to protect the carcass ply **114** from the edges of the belts **126, 128.** The belt edge insert **136** is constructed of extruded rubber, but may be constructed of another elastomeric material. Although shown in the **Figure 1** embodiment, the belt edge **insert 136** is optional and may be omitted in alternative embodiments (not shown).

The tire **100** further includes a tread cap **142** provided between the tread **102** and the first and second belts **126, 128.** The tread cap **142** can be used to assist in holding the components of the tire together (e.g., the belts, plies, and tread). The tread cap **142** can include, for example, one or more polyester or nylon fabric plies. Although shown in the **Figure 1** embodiment, the tread cap **142** is optional and may be omitted in alternative embodiments (not shown).

As shown in **Figure 1****,** the tire **100** also includes a reinforcement ply **144** that extends circumferentially about the tire **100.** Although.the tire **100** features a single reinforcement ply **144,** it can include two or more reinforcement plies in alternative embodiments (not shown).

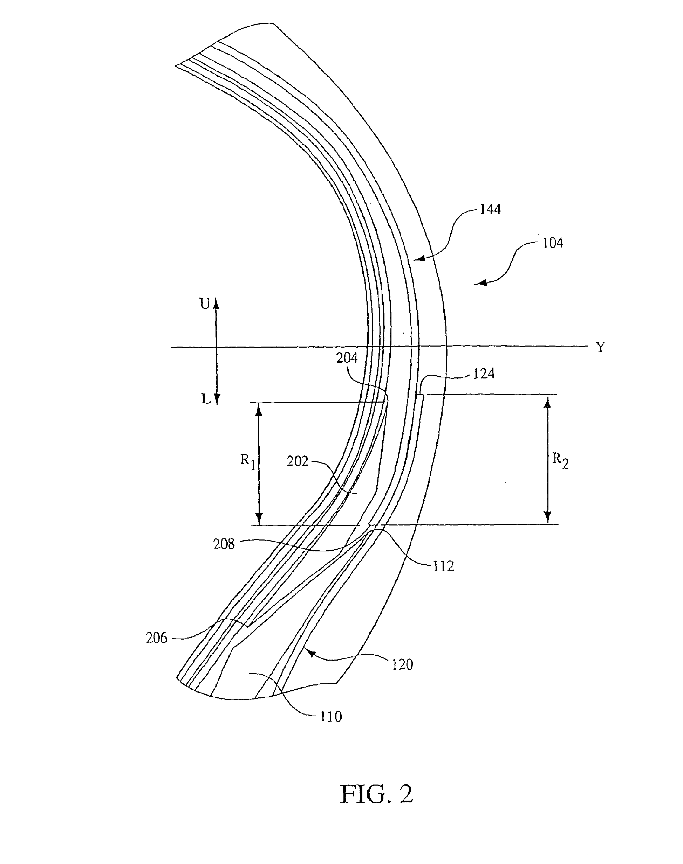

Illustrated in **Figure 2** is an enlarged perspective view of a portion of the tire **100** of **Figure 1** depicting the positioning of the reinforcement ply **144** in the tire **100** in greater detail. The reinforcement ply **144** is provided between the carcass ply **114** and the tread **102** and sidewall **104** (or portion thereof) of the tire **100.**

With continued reference to **Figure 2****,** the tire **100** also includes a bead filler insert **202** having an upper end **204** and a lower end **206.** The bead filler insert **202** is positioned above the bead filler **112** and between the reinforcement ply **144** and the carcass ply **114.** The bead filler insert **202** is configured to serve as a cushion between the reinforcement ply **144** and the carcass ply **114.** The bead filler insert **202** is constructed of rubber, but may be constructed of another elastomeric material. Although the bead filler insert **202** is illustrated as a separate component, it can be an extension of the bead filler **112.**

As shown in **Figure 2****,** the reinforcement ply **144** has a lower end **208** that terminates in the lower section **L** of the tire **100.** More specifically, the tower end **208** of the reinforcement ply **144** may extend below the upper end **204** of the bead filler insert **202.** In other words, the bead filler insert **202** may overlap the reinforcement ply **144.** Preferably, the lower end **208** of the reinforcement ply **144** extends below the upper end **204** of the bead filler insert **202** a radial distance **R₁** between about **10** mm and about 15 mm. In alternative embodiments, the radial distance **R₁** can be less than about 10 mm or greater than about 15 mm depending on the design.

The termination of the lower end **208** of the reinforcement ply **144** can also be discussed in relation to the turn-up end **124** of the carcass ply **114.** For example, the lower end **208** of the reinforcement ply 144 extends bellow the turn-up end **124** of the carcass ply **114.** In other words, the turn-up portion **118** of the carcass ply **114** overlaps the lower end **208** of the reinforcement ply **144.** Preferably, the lower end **208** of the reinforcement ply **144** extends below the turn-up end **124** of the carcass ply **114** a radial distance **R₂** between about 10 mm and about 15 mm. In alternative embodiments, the radial distance **R₂** can be less than about 10 mm or greater than about 15 mm.

Although **Figures 1** and **2** illustrate only half of a cross-section of the tire **100,** the reinforcement ply **144** extends to the other sidewall (not shown) of the tire **100** where the other lower ends (not shown) of the reinforcement ply **144** terminates in the lower section **L** of the other sidewall of the tire **100**. Hence, the reinforcement ply **144** can be referred to as a "half-ply" reinforcement since it covers the upper half of the tire **100** and extends from the lower section **L** of one sidewall (e.g., sidewall **104)** of the tire to the lower section **L** of the other sidewall (i.e., the sidewall not shown) of the tire **100**. In an alternative embodiment (not shown), the reinforcement ply **144** can be provided in two or more pieces that, together, extend from at least a portion of one sidewall to at least a portion of the other sidewall. For example, one piece of the reinforcement ply can have an upper end that terminates at or near the equatorial plane **Eₚ** of the tire and a lower end that terminates in the tower section **L** of one sidewall of the tire, while a second piece of the reinforcement ply can have an upper end that terminates at or near the equatorial plane of the tire and a tower end that terminates in the lower section **L** of the other sidewall of the tire.

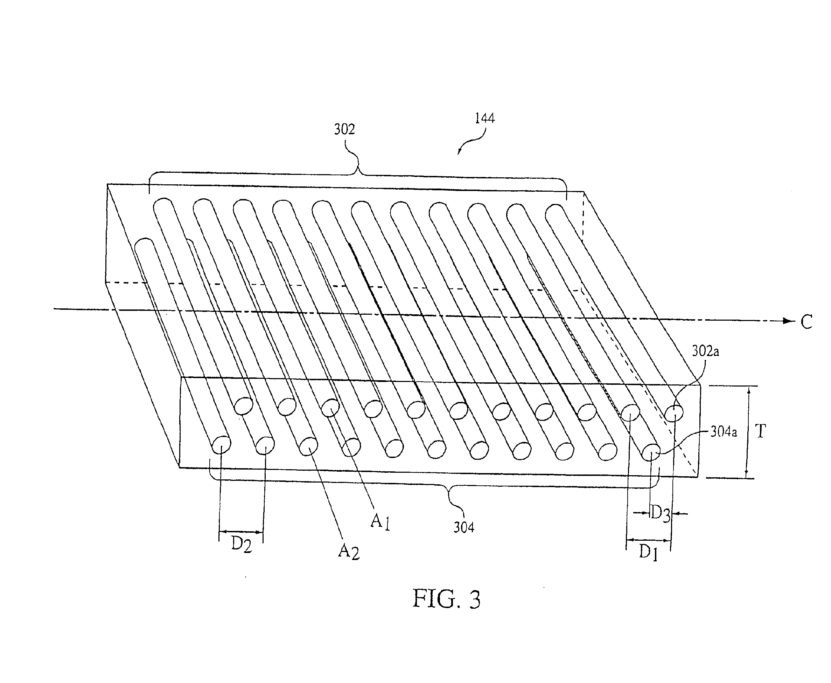

Illustrated in Figure 3 is a perspective view of a portion of one embodiment of the reinforcement ply **144.** The reinforcement ply **144** includes a first row of parallel-aligned cords **302** and a second row of parallel-aligned cords **304.** Both rows of parallel-aligned cords **302, 304** are encapsulated in rubber or another elastomeric material.

As shown in **Figure 3****,** adjacent cords in the first row of parallel-aligned cords **302** are spaced apart from each other a distance **D₁** measured from the center of each adjacent cord. Similarly, adjacent cords in the second row of parallel-aligned cords **304** are spaced apart from each other a distance **D₂** measured from the center of each adjacent cord. Preferably, **D₁** and **D₂** are substantially equal to each other as shown in **Figure 3****.** However, **D₁** and **D₂** may differ from each other in alternative embodiments (not shown).

With reference to **Figure 3****,** each of the cords of the first row of parallel-aligned cords **302** have a longitudinal axis **A₁** that is transversely oriented with respect to circumferential direction **C** of the tire **100.** Similarly, each of the cords of the second row of parallel-aligned cords **304** have a longitudinal axis **A₂** that is transversely oriented with respect to circumferential direction **C** of the tire **100.** In alternative embodiments (not shown), one or both rows of parallel-aligned cords **302, 304** can be oriented at an acute angle with respect to the circumferential direction **C** of the tire **100** depending on the design. Also, the first and second rows of parallel-aligned cords **302, 304** are oriented substantially parallel to each other. However: in an alternative embodiment (not shown), the first and second rows of parallel-aligned cords **302, 304** may not be oriented substantially parallel to each other.

As shown in **Figure 3****,** the first row of parallel-aligned cords **302** is offset from the second row of parallel-aligned cords **304** in a direction substantially parallel to the circumferential direction **C** of the tire **100**. In other words, the cords in the second row of parallel-aligned cords **304** are not substantially aligned with the cords in the first row of parallel-aligned cords **302.** Instead, the second row of parallel-aligned cords **304** is shifted over from the first row of parallel-aligned cords **302** an offset distance **D₃** measured from the center of cord **302a** of the first row of parallel-aligned cords **302** to the center of cord **304a** of second row of parallel-aligned cords **304.** Preferably, the offset distance **D₃** is about 50% of the distance **D₁** between adjacent cords of the first row of parallel-aligned cords **302** (or the distance **D₂** between adjacent cords of the second row of parallel-aligned cords **304).** However, the offset distance **D₃** may be less or greater than 50% in alternative embodiments (not shown).

The reinforcement ply **144** preferably has a thickness **T** between about 1.5 mm and about 2.5 mm. In alternative embodiments, the thickness **T** can be less than 1.5 mm or greater than 2.5 mm depending on the design.

In one embodiment, the first and second rows of parallel-aligned cords **302, 304** are constructed of nylon. In alternative embodiments, one or both rows of parallel-aligned cords 302, **304** may be constructed of polyester.

As shown in **Figure 3**, the reinforcement ply **144** is illustrated as an integral component having two rows of cords disposed therein. In this case, the reinforcement ply **144** can be installed as a single component during the green tire assembly process. In an alternative embodiment (not shown), the first and second row of parallel-aligned cords **302, 304** can be provided as discrete layers that are installed separately during the green tire assembly process, yet cooperate with each to form the reinforcement ply **144** at the conclusion of the tire manufacturing process.

By providing the reinforcement in one or both sidewalls of a tire, sidewall performance of the tire is improved. For example, when the tire deflects, the reinforcement is shifted outward towards the sidewall of the tire, thereby increasing the stiffness of the sidewall of the tire. As stiffness of the sidewall of the tire increases, surface strain in the sidewall of the tire decreases. Reduction of surface strain in the sidewall of the tire can lead to a reduction of surface cracks at the sidewall of the tire, a reduction of deflection of the sidewall, and/or an improvement in vehicle handling.

The following example demonstrates the potential effects of providing the reinforcement in both sidewalls of a tire and should not be construed as limiting the scope or spirit of the present application.

### Example 1

A P255/45R/18 8 tire, having a maximum allowable inflation of 35 psi and maximum load capacity of 1709 1b (hereinafter referred to as the "Control Tire"), was inflated to 19 psi (its minimum allowable inflation) and mounted on a fixture. A computer system was used to simulate the Control Tire to obtain dimensional data of the Control Tire in its unloaded state.

A maximum load of 1709 psi was then applied to the Control Tire causing it to deflect. The computer system then obtained dimensional data of the Control Tire in its loaded state. The dimensional data of the Control Tire in its unloaded state was then compared to the dimensional data of the Control Tire in its loaded state to determine actual strain values along various points on the sidewall of the Control Tire.

This dimensional data was also used to create a computer simulated model of the Control Tire. Modifications could be made to the computer stimulated model of the Control Tire to create virtual tires. From these virtual tires, surface strain values along any point on the sidewall of a tire could be predicted. In this case, the computer simulated model of the Control Tire was modified to create a virtual tire that included a half-ply, single layer reinforcement (with nylon cords) similar to the one described above and shown in **Figure 3** (hereinafter be referred to as the "Reinforced Tire").

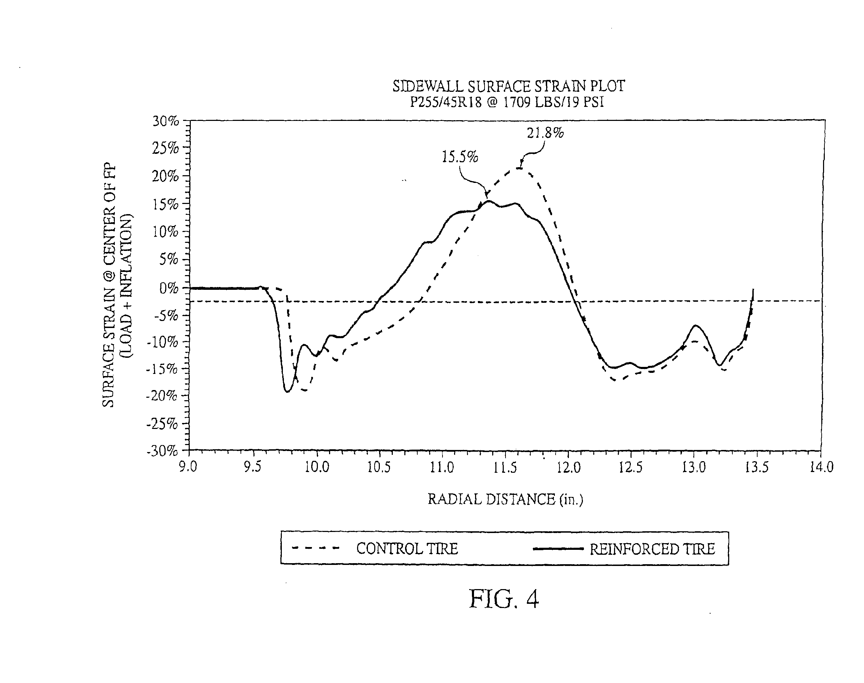

**Figure 4** illustrates the sidewall surface strain graph comparing the predicted surface strain values of the Control Tire with the predicted surface strain values of the Reinforced Tire. The x-axis represents the radial distance in inches from the axis of rotation of the tires, while the y-axis represents the surface strain at the center of the footprint of the tires. In this case, since both tires have a diameter of 18 inches, surface strain measurements were taken at a radial distance beginning at 9 inches and ending at about 13.5 inches (which is the end of the sidewall of the tires). As shown in the graph in **Figure 4****,** the predicted maximum sidewall surface strain of the Control Tire was 21.8%, while the predicted maximum sidewall surface strain of the Reinforced Tire was 15.5%. This represents a reduction in sidewall surface strain of about 6.3%.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See. Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or multiple components.

White the present application illustrates various embodiments, and while these embodiments have been described in some detail, it is not the intention of the applicant to restrict or in any way limit the scope of the claimed invention to such detail. Additional advantages and modifications will readily appear to those skilled in the art. Therefore, the invention, in its broader aspects, is not limited to the specific details, the representative apparatus, and illustrative examples shown and described. Accordingly, departures may be made from such details without departing from the spirit or scope of the applicant's claimed invention.

## Claims

1. A tire (100) having a section height (H₀), a maximum section width (Wₘ), an upper section (U) above the maximum section width (Wₘ), and a lower section (L) below the maximum section width (Wₘ), the tire (100) comprising:
a tread (102) extending circumferentially about the tire (100);
a pair of sidewalls (104);
a pair of bead portions (106), each bead portion (106) comprising a bead core (108), a bead filler (110);
at least one carcass ply (114) extending circumferentially about the tire (100) from one bead portion (106) to the other; and
a reinforcement ply (144) extending circumferentially about the tire (100) and being disposed between the at least one carcass ply (114) and tread (102) and at least one of the sidewalls (104) of the tire (100), the reinforcement ply (144) having a lower end (208) that terminates in the lower section (L) of the tire (100),
**characterized in that**
each bead portion (106) comprises a bead filler insert (202) provided above the bead filler (110) and between the reinforcement ply (144) and the at least one carcass ply (114),
and the bead filler insert (202) is spaced from the bead filler (110) by a gap, wherein the gap between the bead filler (110) and the separate bead filler insert (202) does not include cords and the gap does not contact the bead core (108).

2. The tire of claim 1, wherein the reinforcement ply (144) includes a first row of parallel-aligned cords (302) and a second row of parallel-aligned cords (304) spaced apart from the first row of parallel-aligned cords (302).

3. The tire of claim 2, wherein the first and second rows of parallel-aligned cords (302, 304) are oriented substantially parallel to each other.

4. The tire of claim 2, wherein the first and second rows of parallel-aligned cords (302, 304) have longitudinal axes (Ai, A₂) that are transversely oriented with respect to a circumferential direction (C) of the tire (100).

5. The tire of claim 2, wherein adjacent cords in the first row of parallel-aligned cords (302) are spaced-apart from each other a first distance (Dj) measured from the center of adjacent cords and adjacent cords in the second row of parallel-aligned cords (304) are spaced-apart from each other a second distance (D₂) measured from the center of adjacent cords.

6. The tire of claim 5, wherein the second row of parallel-aligned cords (304) are offset from the first row of parallel-aligned cords (302) an offset distance (D₃).

7. The tire of claim 6, wherein the offset distance (D₃) is about 50% of the first distance (DJ) between adjacent cords in the first row of parallel-aligned cords (302).

8. The tire of claim 1, wherein the at least one carcass ply (114) is wound outwardly about one of the bead cores (108) and extends toward the tread (102) to form a turn-up portion (120) that terminates at a turn-up end (124), wherein the lower end (208) of the reinforcement ply (144) extends below the turn-up end (124) of the at least one carcass ply (114).

9. The tire of claim 8, wherein the turn-up end (124) of the turn-up portion (120) is located in the lower section (L) of the tire (100).

10. The tire of claim 8, wherein the turn-up portion (120) has a height (Hi) that is between about 30% and about 70% of the section height (H₀) of the tire (100).

11. The tire of claim 8, wherein the lower end (208) of the reinforcement ply (144) extends below the turn-up end (124) of the at least one carcass ply (114) a radial distance between about 10 mm and about 15 mm.

12. The tire of claim 8, wherein the lower end (208) of the reinforcement ply ( 144) is provided between the at least one carcass ply (114) and the turn-up portion (120) of the at least one carcass ply (114).

13. The tire of claim 1, wherein the lower end (208) of the reinforcement ply (144) extends below an upper (204) end of the bead filler insert (202).

14. The tire of claim 1, wherein the bead filler (110) has upper walls that converge at an apex at a radially outward position.

15. The tire of claim 1, wherein the gap between the bead filler (110) and the separate bead filler insert (202) consists of a rubber material and the rubber material in the gap does not contact the bead core (108).
